# EUROPEAN PATENT APPLICATION

(11) **EP 3 358 521 A1**
(43) Date of publication of application: **08.08.2018**
(21) Application number: 16881998.5
(22) Date of filing: 14.12.2016
(51) Int. Cl.: G06Q 50/28, G06Q 10/08, G06Q 30/02, G09F 21/04, G09F 13/04

(54) **DELIVERY METHOD FOR ENABLING ADVERTISEMENT OF DELIVERY ORDERER**

(30) Priority: 29.12.2015 KR 20150188169
(71) Applicant: Chang, Young Cheol, Gwangju 62296 (KR)
(72) Inventor: Chang, Young Cheol, Gwangju 62296 (KR)
(74) Representative: Zardi, Marco
(86) International application number: PCT/KR2016/014658
(87) International publication number: WO 2017/116046

(57) **Abstract**

The present invention relates to a delivery method for enabling the advertisement of a delivery orderer, the delivery method including: registering one or more call terminals and one or more delivery carrier terminals of one or more delivery persons, allocating IDs to the call terminals and the delivery carrier terminals, and storing the IDs; when a delivery order is transmitted from a customer terminal, allocating an ID to the customer terminal, and storing the customer terminal ID with information and advertising content associated with the customer terminal ID; transmitting a call for a delivery order request to the call terminals of the delivery persons; transmitting the advertising content corresponding to the ID of the customer terminal to the delivery carrier terminal of one of the delivery persons who has transmitted a call awareness request first; and displaying the transmitted advertising content on the display of the delivery carrier terminal.

## Description

### Technical Field

The present invention relates to a delivery method for enabling the advertisement of a delivery orderer, and more specifically to a delivery method for enabling the advertisement of a delivery orderer, which enables an advertisement of a customer having requested the delivery of a delivery target product to be displayed on the display of the delivery carrier of a delivery person responsible for the delivery of the delivery target product when the customer requests the delivery of the delivery target product, thereby providing new delivery service adapted for not only delivery but also advertisement to the customer.

### Background Art

It is true that conventional delivery service is recognized as very simple and low level business which provides only service adapted to receive a delivery target product of a customer having requested delivery and to deliver the delivery target product to a desired delivery destination.

Recently, delivery persons use transportation means, such as two-wheeled vehicles, call van trucks, or the like, to deliver delivery target products. In the transportation means, a delivery carrier is installed on a luggage rack in the case of a two-wheeled vehicle, and a cargo compartment is usually formed in the case of a truck.

A display (sign board) made of LEDs or an LCD is usually installed on the outside of such a delivery carrier (hereinafter, this term is used to also refer to the cargo compartment of a truck).

The above-described display of the delivery carrier is in the state of being connected to a communication network, and has the function of receiving information from an operating server and then displaying the corresponding information.

However, the above function is used only for the advertisement of a delivery service company itself. Therefore, there is an urgent need for new and advanced delivery service in order to resolve issues regarding the activation of delivery service and low-wage labor.

### [Related Technical Documents]

1. Orderer Management Method Using Card Reader for Delivery Business and Apparatus Thereof (Korean Patent Application No. 1020050047995)
2. Custom Selection Type Internet Commercial Transaction System (Korean Patent Application No. 1019990057708)

### Disclosure

### Technical Problem

The present invention is intended to overcome the above-described problem, and an object of the present invention is to provide a delivery method for enabling the advertisement of a delivery orderer, which enables an advertisement of a customer having requested the delivery of a delivery target product to be displayed on the display of the delivery carrier of a delivery person having caught a call for the delivery request of the customer first when the customer requests the delivery of the delivery target product, and also enables the advertisement of the customer having requested the delivery of the delivery target product to be continuously displayed on the display (sign board) of the delivery person until the moment the delivery person completes the delivery, so that not only delivery service but also separate merits can be given to the customer, thereby activating delivery service.

However, the objects of the present invention are not limited to the mentioned objects, and other objects which are not mentioned will be apparent to a person skilled in the art from the following description.

### Technical Solution

In order to accomplish the above object, according to an embodiment of the present invention, there is provided a delivery method for enabling the advertisement of a delivery orderer, the delivery method including: registering one or more call terminals of one or more delivery persons and one or more delivery carrier terminals possessed by the delivery persons, allocating IDs to the call terminals and the delivery carrier terminals, and storing the IDs in the DB of a delivery service company operating server; when a delivery order is transmitted from a customer terminal, allocating an ID to the customer terminal, and storing the customer terminal ID in the DB of the delivery service company operating server with information and advertising content corresponding to the customer terminal associated with the customer terminal ID; transmitting a call for a delivery order request from the customer terminal ID to the call terminals of the delivery persons; transmitting the advertising content corresponding to the ID of the customer terminal to the delivery carrier terminal of one of the delivery persons who has transmitted a call awareness request first; and displaying the transmitted advertising content of the customer on the display of the delivery carrier terminal.

Furthermore, according to the present invention, there is provided a delivery method for enabling the advertisement of a delivery orderer, the delivery method including: registering one or more call terminals of one or more delivery persons and one or more delivery carrier terminals possessed by the delivery persons, allocating IDs to the call terminals and the delivery carrier terminals, and storing the IDs in the DB of a delivery service company operating server; storing information and advertising content corresponding to a customer terminal in the DB of the delivery service company operating server with the information and advertising content associated with the ID of the customer terminal; when a delivery order request is transmitted from the customer terminal, determining whether the information and the advertising content corresponding to the customer terminal ID have been stored; checking the advertising content for an update; transmitting a call for the delivery order request from the customer terminal ID to the call terminals of the delivery persons; transmitting the advertising content corresponding to the ID of the customer terminal to the delivery carrier terminal of one of the delivery persons who has transmitted a call awareness request first; and displaying the advertising content of the customer on the display of the delivery carrier terminal.

### Advantageous Effects

The delivery method for enabling the advertisement of a delivery orderer according to an embodiment of the present invention provides an effect in which a delivery service company enables an advertisement, required by a customer, to be exposed to the public by means of the display installed on the delivery carrier of a delivery person for the sake of the benefit of the customer when the customer requests the delivery of a delivery target product, thereby providing not only delivery service but also merited service to the customer having requested the delivery.

Furthermore, the present invention is a significantly useful invention which provides not only delivery service but also new additional service, thereby reducing the burden of delivery expenses, contributing to the activation of delivery service, and providing a new business model for delivery service.

### Description of Drawings

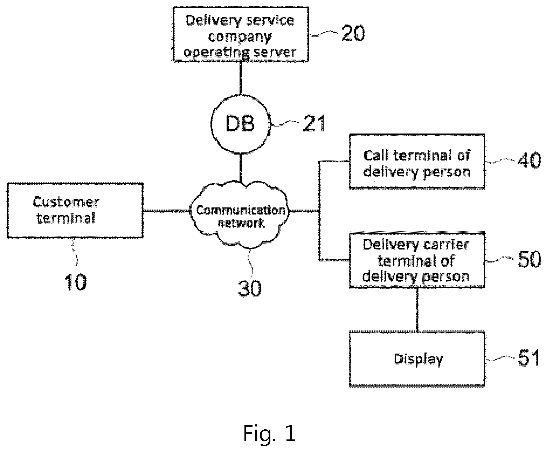

FIG. 1 is a view showing a delivery method for enabling the advertisement of a delivery orderer according to an embodiment of the present invention;

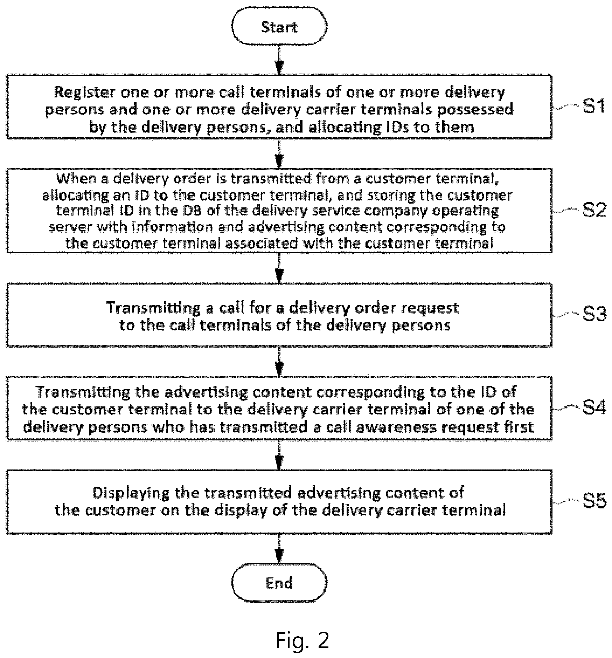

FIG. 2 is a view showing a delivery method for enabling the advertisement of one delivery orderer according to an embodiment of the present invention;

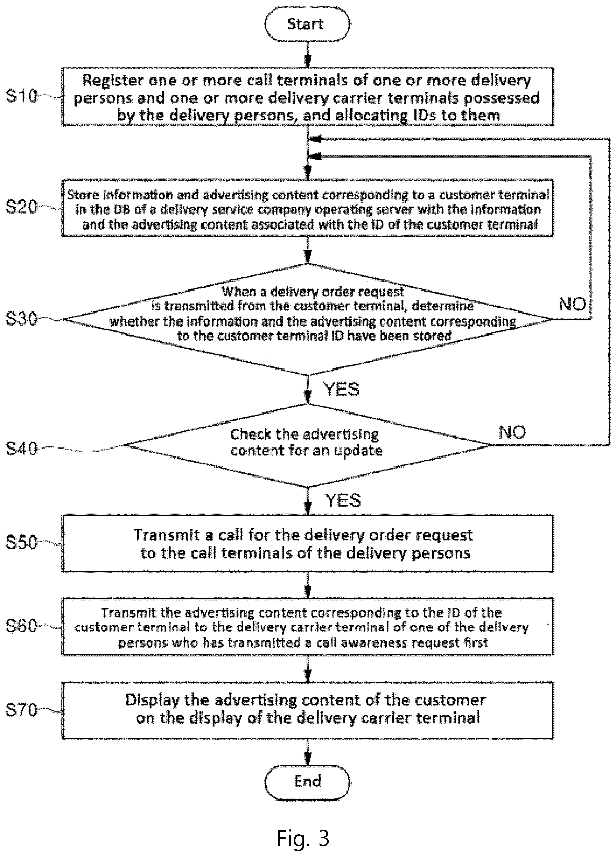

FIG. 3 is a view showing a delivery method for enabling the advertisement of a delivery orderer according to another embodiment of the present invention; and

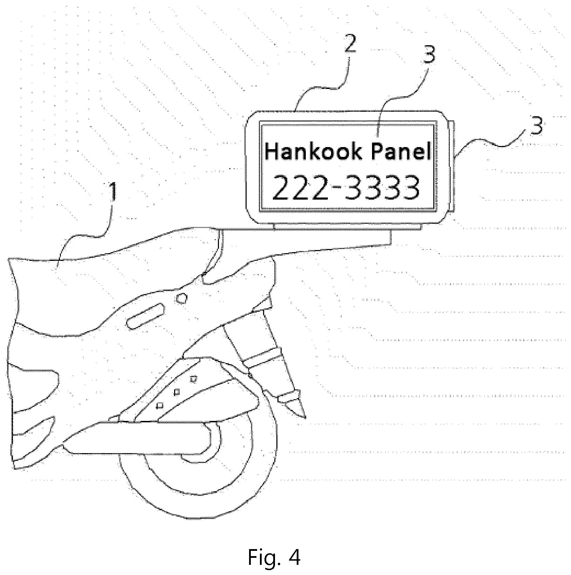

FIG. 4 is a view showing the schematic configuration of a delivery method for enabling the advertisement of a delivery orderer according to an embodiment of the present invention.

### Best Mode

A detailed description of preferred embodiments of the present invention will be given below with reference to the accompanying drawings. In the following description of the present invention, when it is determined that a detailed description of a related well-known function or element may make the gist of the present invention unnecessarily vague, the detailed description will be omitted.

In the present specification, the case where any one element "transmits" data or a signal to another element means that the former element may transmit the data or signal directly to the other element or transmit the data or signal to the other element via at least one element.

A delivery method for enabling the advertisement of a delivery orderer according to one embodiment of the present invention is configured as follows:
The method includes: step S1 of registering one or more call terminals 40 of one or more delivery persons and one or more delivery carrier terminals 50 possessed by the delivery persons, allocating IDs to the call terminals 40 and the delivery carrier terminals 50, and storing the IDs in the DB 21 of a delivery service company operating server 20; step S2 of, when a delivery order is transmitted from a customer terminal 10, allocating an ID to the customer terminal, and storing the customer terminal ID in the DB 21 of the delivery service company operating server 20 with information and advertising content corresponding to the customer terminal associated with the customer terminal ID; step S3 of transmitting a call for a delivery order request from the customer terminal ID to the call terminals 40 of the delivery persons; step S4 of transmitting the advertising content corresponding to the ID of the customer terminal 10 to the delivery carrier terminal 50 of one of the delivery persons who has transmitted a call awareness request first; and step S5 of displaying the transmitted advertising content of the customer on the display 51 of the delivery carrier terminal 50.

Furthermore, the present invention may be implemented by another embodiment. This method is configured as follows. The method is intended to update the advertising content of a customer in response to a request from the customer, to store the updated advertising content, and to display the updated advertising content on the display 51 of one of the delivery carrier terminals 50 upon a delivery request from the customer.

In other words, the method includes: step S10 of registering one or more call terminals 40 of one or more delivery persons and one or more delivery carrier terminals 50 possessed by the delivery persons, allocating IDs to the call terminals 40 and the delivery carrier terminals 50, and storing the IDs in the DB 21 of a delivery service company operating server 20; step S20 of storing information and advertising content corresponding to a customer terminal 10 in the DB 21 of the delivery service company operating server 20 with the information and advertising content associated with the ID of the customer terminal 10; step S30 of, when a delivery order request is transmitted from the customer terminal 10, determining whether the information and the advertising content corresponding to the customer terminal ID have been stored; step S40 of checking the advertising content for an update; step S50 of transmitting a call for the delivery order request from the customer terminal ID to the call terminals 40 of the delivery persons; step S60 of transmitting the advertising content corresponding to the ID of the customer terminal 10 to the delivery carrier terminal 50 of one of the delivery persons who has transmitted a call awareness request first; and step S70 of displaying the advertising content of the customer on the display 51 of the delivery carrier terminal 50.

At step S30 of, when a delivery order request is transmitted from the customer terminal 10, determining whether the information and the advertising content corresponding to the customer terminal ID have been stored, when a delivery order request has been transmitted from a customer terminal 10 but information and advertising content corresponding to a customer terminal ID have not been stored in the DB 21 of the delivery service company operating server 20, the customer of the customer terminal 10 is determined to be a new customer, a customer terminal ID is newly allocated to the customer terminal 10, and the information of the customer and advertising content desired by the customer are stored in the DB 21 of the delivery service company operating server 20 with the information and the advertising content associated with the newly allocated customer terminal ID.

Furthermore, at step S40 of checking the advertising content for an update, when it is necessary to update the advertising content of the customer, the process returns to step S30, an update to the advertising content desired by the customer is made, and the updated advertizing content is transmitted to the delivery carrier terminal 50. In contrast, when the advertising content for the customer terminal ID is the same as the previously created advertising content or when the advertising content has been already updated, the previous advertising content or the updated advertising content may be transmitted to delivery carrier terminal 50, and may be then displayed on the display 51.

This is configured to display the newest advertising content, i.e., updated advertising content, stored in the DB 21 of the delivery service company operating server 20, on the display 51 when transmitting the advertising content corresponding to the ID of the customer terminal 10 to the delivery carrier terminal 50.

In the present invention, each of the delivery persons needs to have a call terminal 40 and a delivery carrier terminal 50. The call terminal 40 is used for a delivery person to catch a call. The delivery carrier terminal 50 is a component required to display the advertising content corresponding to the ID of the customer terminal 10 on the display 51, i.e., a sign board, installed on a delivery vehicle.

Accordingly, the present invention is configured to be connected to at least one display 51 installed on any portion of each of the delivery vehicles of all the delivery persons in an electrical or communicative manner.

In this case, each of the delivery carrier terminals 50 transmits and receives information to and from the delivery service company operating server 20 via a wired/wireless communication means, and is connected to the display 51 via a wired/wireless connection and provides advertising content information to the display 51.

The advertising content includes a text, an image, a moving image, and/or the like capable of providing notification of the name and contact information of the customer, i.e., a company having requested delivery, an advertisement target product, a service type, and/or the like.

Furthermore, the delivery carrier terminal 50 may be configured to separately have a DB, to store the advertising content of a customer company, created by the delivery service company in advance, in the DB of the delivery carrier terminal 50, and to display the advertising content on the display 51 of the delivery carrier terminal 50 when a call awareness request matching the ID of a corresponding customer terminal is made or when the delivery service company needs it.

Each of the call terminals and delivery carrier terminals of the delivery persons, the displays 51, the customer terminal, and the delivery service company operating server 20 transmits and receives data over a wired/wireless communication network.

In this case, the communication network may be a high-speed backbone network of a large-scale communication network capable of a large capacity, long distance voice and data service, or a next generation wired/wireless network capable of providing Internet service or a high-speed multimedia service. In the case where the communication network is a mobile communication network, the mobile communication network may be a synchronous mobile communication network or an asynchronous mobile communication network. An example of the asynchronous mobile communication network is a Wideband Code Division Multiple Access (WCDMA) communication network. In this case, although shown in the drawings, the mobile communication network may include a radio network controller (RNC). Although the WCDMA network is described as an example of the communication network, the communication network according to the present invention may be a next generation communication network, such as a 3G network, an LTE network, or a 4G network, or another IP-based network.

Furthermore, the customer terminal 10 according to the present invention is a means for requesting a delivery order, including customer information, the delivery location information of a delivery target product, advertising content, and/or the like, from the delivery service company operating server 20 over the communication network.

The delivery service company operating server 20 is a means for transmitting a call for a delivery order request to all the delivery persons by means of the communication network and a well-known delivery call system and also transmitting the advertising content to the delivery carrier terminal 50.

In this case, the delivery call system is a means for posting the delivery order request of the customer terminal on the call terminals 40 of all the delivery persons and providing the customer information and the delivery location information of the delivery target product to a corresponding delivery person when receiving a call from a first one of a first delivery person call terminal 40-1 to an n-th delivery person call terminal 40-ns, thereby enabling delivery.

For this purpose, each of the delivery carriers of the delivery vehicles, the displays, and the call terminals of the delivery persons preferably includes a GPS reception module for receiving location information.

The respective delivery persons who operate the first delivery person call terminal 40-1 to the n-th delivery person call terminal 40-n (n is a number equal to or larger than 2) also operate delivery vehicles 1. Motorcycles, call van vehicles, or other cargo vehicles are used as the delivery vehicles. In the delivery vehicles, a delivery carrier is installed on a luggage rack in the case of a two-wheeled vehicle, and a cargo compartment is usually formed in the case of a truck. A display (sign board) made of LEDs or an LCD is installed on the outside of the delivery carrier (the cargo compartment). It will be apparent that the delivery carrier terminal is in the state of being connected to a communication network, and includes a control unit (not shown) equipped with a program adapted to enable advertising content to be displayed on the display 51.

Accordingly, the advertising content, i.e., an advertisement of the customer, transmitted from the delivery service company operating server 20 can be displayed on the display 51 from the moment the delivery person call terminal receives a call to the moment delivery is completed.

The present invention may be implemented as computer-readable code which is stored in a computer-readable storage medium. The computer-readable storage medium includes all types of storage devices in which computer system-readable data can be stored.

Examples of the computer-readable recording medium include ROM, RAM, CD-ROM, magnetic tape, a floppy disk, optical data storage, etc., and also include one implemented in the form of carrier waves (e.g., in the case of transmission via the Internet).

Furthermore, the computer-readable medium may be distributed among computer systems connected via a network, and then computer-readable code may be stored and executed on the computer-readable medium in a distributed manner. Furthermore, a functional program, code and, code segments for implementing the present invention may be easily deduced by programmers in the art to which the present invention pertains.

While the preferred embodiments of the present invention have been disclosed in the present specification and the drawings above and the specific terms have been used, this is generally intended to easily describe the technical content of the present invention and help to facilitate an understanding of the present invention, but is not intended to limit the scope of the present invention. It will be apparent to a person having ordinary knowledge in the art to which the present invention pertains that modifications based on the technical spirit of the present invention, other than the disclosed embodiments, may be practiced.

### [Description of reference characters]

1: delivery vehicle 2: delivery carrier
3: sign board (display)
10: customer terminal 20: delivery service company operating server
30: wired/wireless communication network
40: call terminal of delivery person
50: delivery carrier terminal of delivery person
51: display

## Claims

1. A delivery method for enabling advertisement of a delivery orderer, in which a delivery service company operating server provided with a database (DB) transmits and receives data to and from one or more call terminals and delivery carrier terminals of one or more delivery persons and at least one customer terminal over a wired/wireless communication network, and the delivery carrier terminals are connected to one or more displays via wired/wireless connections and provide advertising content information, the delivery method comprising:
registering, by the delivery service company operating server, the call terminals of the delivery persons and the delivery carrier terminals possessed by the delivery persons, allocating, by the delivery service company operating server, IDs to the call terminals and the delivery carrier terminals, and storing, by the delivery service company operating server, the IDs in the DB;
when a delivery order is transmitted from the customer terminal, allocating, by the delivery service company operating server, an ID to the customer terminal, and storing, by the delivery service company operating server, the customer terminal ID in the DB with information and advertising content corresponding to the customer terminal associated with the customer terminal ID;
transmitting, by the delivery service company operating server, a call for a delivery order request from the customer terminal ID by receiving the delivery order request transmitted from the customer terminal and then transmitting the delivery order request to the call terminals of the delivery person;
transmitting, by the delivery service company operating server, the advertising content associated with the ID of the customer terminal to the delivery carrier terminal of one of the delivery persons who has transmitted a call awareness request first in response to the call transmitted from the delivery service company operating server; and
displaying, by the delivery carrier terminal of the delivery person, the transmitted advertising content of the customer on a corresponding one of the displays so that the advertising content transmitted from the delivery service company operating server and corresponding to the customer who has requested the delivery order is displayed on the display from a moment the call terminal of the delivery person receives the call to a moment the delivery is completed.

2. A delivery method for enabling advertisement of a delivery orderer, in which a delivery service company operating server provided with a database (DB) transmits and receives data to and from one or more call terminals and delivery carrier terminals of one or more delivery persons and at least one customer terminal over a wired/wireless communication network, and the delivery carrier terminals are connected to one or more displays via wired/wireless connections and provide advertising content information, the delivery method comprising:
registering, by the delivery service company operating server, the call terminals of the delivery persons and the delivery carrier terminals possessed by the delivery persons, allocating, by the delivery service company operating server, IDs to the call terminals and the delivery carrier terminals, and storing, by the delivery service company operating server, the IDs in the DB;
allocating, by the delivery service company operating server, an ID to a customer terminal which wants advertisement, and storing, by the delivery service company operating server, the customer terminal ID in the DB with information and advertising content corresponding to the customer terminal associated with the customer terminal ID;
when a delivery order request is transmitted from the customer terminal, determining, by the delivery service company operating server, whether the information and the advertising content corresponding to the customer terminal ID have been stored, and checking, by the delivery service company operating server, the advertising content for an update;
transmitting, by the delivery service company operating server, a call for the delivery order request from the customer terminal ID by receiving the delivery order request transmitted from the customer terminal and then transmitting the delivery order request to the call terminals of the delivery person;
transmitting, by the delivery service company operating server, the advertising content associated with the ID of the customer terminal to the delivery carrier terminal of one of the delivery persons who has transmitted a call awareness request first in response to the call transmitted from the delivery service company operating server; and
displaying, by the delivery carrier terminal of the delivery person, the transmitted advertising content of the customer on a corresponding one of the displays so that the advertising content transmitted from the delivery service company operating server and corresponding to the customer who has requested a delivery order is displayed on the display from a moment the call terminal of the delivery person receives the call to a moment the delivery is completed.
